# EUROPEAN PATENT SPECIFICATION

(11) **EP 4 276 509 B1**
(45) Date of publication and mention of the grant of the patent: **12.11.2025**
(21) Application number: 23172277.8
(22) Date of filing: 09.05.2023
(51) Int. Cl.: G02B 6/44

(54) **CABINET**
SCHRANK
ARMOIRE

(30) Priority: 09.05.2022 DK PA202270245
(43) Date of publication of application: 15.11.2023
(73) Proprietor: Triarca A/S, 8783 Hornsyld (DK)
(72) Inventor: Nissen, Martin, 8783 Hornsyld (DK)
(74) Representative: Patrade A/S

(56) References cited:
- EP-B1- 1 616 210
- EP-B1- 3 285 105
- US-A1- 2010 172 622

## Description

### Field of the Invention

The present invention is directed at a cabinet for connecting and keeping optical fibres in an orderly manner.

### Background of the Invention

It is well known to arrange cabinets along streets in which cabinets for example electrical wiring, telephone cables etc. are placed. Typically, also other installations will be stored in the cabinet, such as switches, fuses etc.

With the distribution of optical fibres to substantially all households, there is a need for new cabinets which are specifically designed for this purpose. Optical fibres are particularly used for distributing digital signals such as used for internet, phonelines, cable tv etc. Due to the physics of light it is possible to transport significant amounts of data in fibre optics, which is necessary with the ever increasing demands for data communication.

ES1047427U U discloses a termination cabinet for organizing and protecting optical fibres, wherein a bundle comprising a plurality of optical fibres arranged in a sheeting pipe are introduced into the termination cabinet and are configured for being spliced to a second plurality of optical fibres leading to discrete users in the vicinity of the cabinet. EP3285105B1 discloses a fibre optic power distribution box.

Typically, optical fibres are distributed from a signal source in ever decreasing numbers of single fibres, as the single optical fibre approaches its final destination (for example a private household). Each single fibre is provided with a sheeting - a thin plastic tube surrounding the optical fibre.

In order to distribute the optical fibres into each household it is necessary to splice fibres at intervals. Each fibre is not provided in an infinite length and will typically need to be extended. It is a complicated process to splice together two ends of the optical fibre, as a connection/splice shall not cause any loss of data transfer capability. Also, the splice itself is considered a weak point in the fibre's length and shall therefore be handled and stored carefully.

Further, the substantial number of optical fibres requires a simple and intuitive system of keeping order in the multitude of fibres required, such that the correct fibres are lead to the intended user, and later if disturbances occur the identification of the error/breakdown may easier be identified (and rectified).

### Object of the Invention

Consequently, it is an object of the present invention to provide a termination cabinet which addresses the special requirements relating to optical fibres and at the same time facilitates an easy and intuitive order, such that it is easily determinable which fibre leads to which end user.

### Description of the Invention

The invention addresses this by providing a termination cabinet for organizing and protecting optical fibres, according to claim 1. Different embodiments are set out in the dependent claims.

In the context of at least the present invention, the term "termination cabinet" shall be understood as a cabinet where optical fibres are stored, organised and ordered prior to the single optical fibres being led to the end user.

The provision of a splice box which is maintained inside the cabinet provides a number of advantages. Firstly, the splice box, as will be further discussed below, provides an orderly and safe storage of the sometimes very large number of individual optical fibres. The safe storage has multiple aspects. In order to splice two ends of optical fibre together it is necessary to have a surplus length of fibre available. However, once the fibre ends are spliced together the surplus length is no longer needed. The splice is typically the more fragile section, and by providing a splice box where the surplus fibre may be orderly coiled and where the splice may be maintained in a secured hold, it is avoided that any undesired tension is applied to the splice (and fibre).

The single fibres are inserted in dedicated holders in the cabinet (typically a number of brackets are provided where each bracket has a number of holders). Each bracket is identified/marked such that the end user of that particular single optical fibre is identified.

A further level of protection may be seen in that once the fibres are coiled in the box, and the box closed, the fibre coils do not interfere with the personnel organizing the fibres in the holders on the brackets. Also, the closed box provides protection (to a certain degree) against influence from ambient environment (dust, moisture etc).

By fixating the fibres (in their individual sheeting) in the holders in the brackets, each single fibre is identifiable, and may be marked with a unique code/address identifying the end user. If/when at a later stage a search for a failure is to be carried out, it is easy to identify the possible erroneous fibre in the cabinet.

In one embodiment of the termination cabinet, the splice box is releasably arranged on a box holder inside the cabinet.

Arranging the splice box releasably in the cabinet may be provide for a more compact design of the cabinet while achieving better accessibility for the technician during maintenance of the fibre connections.

In a further embodiment of the termination cabinet, where the termination cabinet comprises a housing and a door, the box holder is fixed to the housing, and the termination cabinet or the splice box comprises a temporary box holder for temporarily arranging the slice box on the door.

The temporary holders may have the effect that the splice box can be arranged in the close vicinity of the fibre connections, which may be beneficial in that the length of excess fibres may be reduced and that any coiled up excess fibres in the cabinet may remain soiled up in the cabinet during maintenance.

In one embodiment, the termination cabinet comprises a coil support. The coil support can hold any excess fibres inside the cabinet. When installing the fibre net connections, the fibres are typically installed with an excess length for easier handling when connecting the fibres.

The coil support may be comprised in the box holder.

According to the claimed invention a moisture seal is provided. This seal is arranged in the lower part of the cabinet, beneath the brackets. The moisture seal may for example be a foam body (high density foam). As these cabinets are arranged outside, and the fibre-optic/optical cables are distributed underground, the position where the optical fibres enter the cabinet is a transition zone between the (moist) ground and the environment inside the cabinet. Optimally the interior of the cabinet should be isolated as much as possible from the ambient environment, in order to hinder corrosion, unwanted growth of fungus or other undesired items.

In order to allow the optical fibres (including sheeting) to pass the moisture barrier, preformed cut-outs (score lines) are provided in a predetermined pattern in the material of the moisture barrier. This pattern is designed such that the various optical fibres in an orderly fashion may be led to the brackets in the holders, and/or to the splice box.

In a further embodiment a bracket is provided where said bracket has a holder for retaining the moisture barrier in a fixed position and separate second holders for organizing, guiding and holding bundles of optical fibres.

The holder will further improve the organization of the optical fibres, and furthermore provide a fixed holder for the moisture barrier ensuring that the moisture barrier is correctly installed in the cabinet and retained in its intended position.

The invention also discloses a foundation structure, where said foundation structure has one or more passageways allowing the introduction of bundles of optical fibres into the cabinet, and out of the cabinet, and where said foundation structure comprises means for fastening the cabinet to said foundation structure. The foundation structure shall allow for the optical fibres to be guided into and out of the cabinet, in such a manner that the fibres are not damaged, and at the same time are maintained in an orderly fashion. As the cabinet is intended to be placed in a public environment, the foundation structure shall provide a solid base, and the cabinet itself must be manufactured from strong and durable materials, such as for example aluminium, steel or the like.

### Description of the Drawing

Embodiments of the invention will now be explained with reference to the accompanying drawing, wherein:
- Fig 1: illustrates an embodiment of a termination cabinet according to the present invention;
- Fig. 2: illustrates a splice board;
- Fig. 3: illustrates markers used for identifying each separate optical fibre;
- Fig. 4: illustrates a bracket for mounting of a moisture barrier in a lower part of the cabinet;
- Fig. 5: illustrates a section of the moisture barrier.
- Fig. 6: illustrates one embodiment of the cabinet with a box holder;
- Fig. 7: illustrates the embodiment of fig. 6 with the splice box arranged in a temporary holder;
- Fig. 8: illustrates one embodiment of the cabinet with the splice box arranged in box holder;
- Fig. 9: illustrates one embodiment of the cabinet with the splice box arranged in the temporary holder;
- Fig. 10: illustrates embodiments of box holder and the splice box with hinges.

### Detailed Description of the Invention

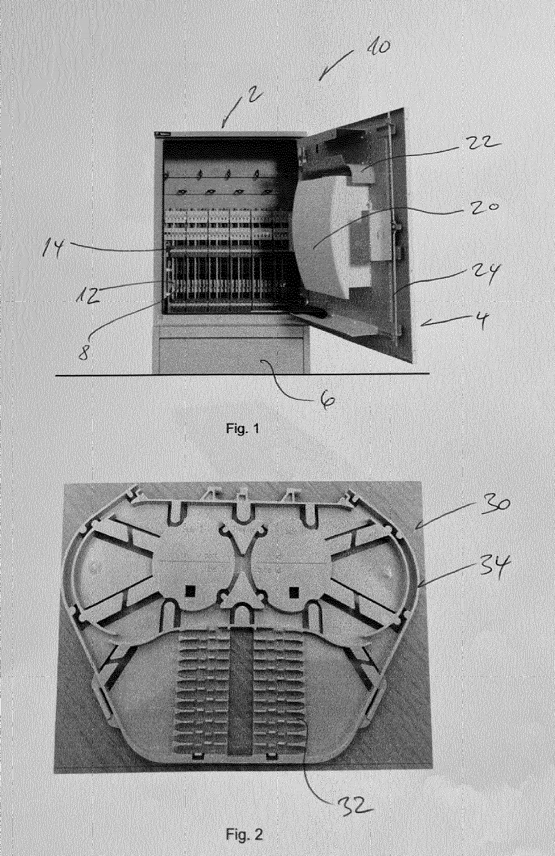

In fig. 1 is illustrated an embodiment of a termination cabinet according to the present invention.

The cabinet 10 comprises a housing 2 having side walls, and a rear wall. Furthermore, an openable door 4. The cabinet 10 is placed on a foundation structure 6. The foundation structure is superposed a plurality of ducts/pipes (not illustrated). The ducts are provided in order to lead optical fibres to and from the cabinet (10) constituting a first entrance opening, where a second plurality of optical fibres leading to discreet users in the vicinity of the cabinet, is introduced into the cabinet through a second entrance opening.

In the illustrated embodiment a plurality of optical fibres 8 are arranged in separate holders 12, where the plurality of holders 12 are arranged in racks 14. Although not visible more layers of racks may be provided, where each rack 14 comprises a plurality of holders 12, such that a large plurality of optical fibres may be organized in a single cabinet 10.

On the inside 16 of the door 4, a splice box 20 and a coil support 22 is arranged. Further a simple locking mechanism 24 is illustrated, such that when the door is closed and locked, the locking mechanism hinders unwarranted access.

With reference to fig. 2 a splice board 30 is illustrated. On this splice board the ends of optical fibres which have been spliced together, may be retained in an orderly fashion, by arranging the spliced fibres in the guideways 32, and carefully coiling the fibres around the curling guides 34. In this manner the fragile optical fibres and their splices are securely and orderly retained on the splice board 30. A plurality of splice boards 30 may be arranged inside the splice box 20, and an excess length of optical fibre coiled up outside on the splice box, by means of the coil supports 22.

This arrangement provides a number of advantages. For example, when the fibres are to be spliced together it is possible to do this at a location removed from the cabinet 10. This may for example be inside a van or the like, where the environment may be controlled, thereby providing optimum conditions for the process and the personnel carrying out the splicing of the optical fibre ends. Once a successful splice is created the surplus length of fibre may carefully be coiled and arranged around the splice box.

At the same time, due to the arrangement of the optical fibres in the holders on the racks, it is easy to identify each single optical fibre, and ensure that it is lead to the correct end user.

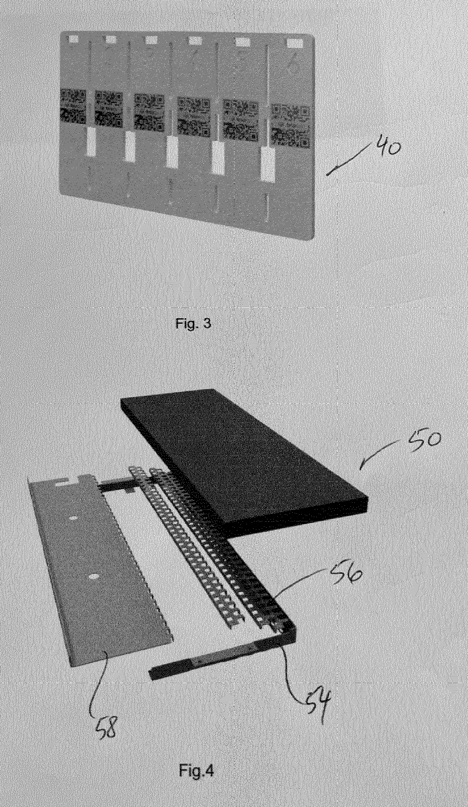

In order to further enhance this process, each position in the holders on the racks (and possibly also on the fibres themselves) may be provided with a marker, as illustrated in fig. 3. The markers 40 are in this example provided with QR codes which may contain information relating to the end user, such that by later scanning the QR codes it is easy to identify a specific desirable fibre. Alternatively, the markers may be provided with numbers or letters or a combination.

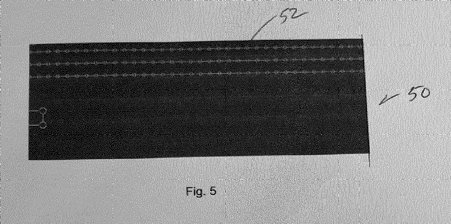

In fig. 4 is illustrated a moisture barrier and a bracket for mounting said moisture barrier in the cabinet. A section of the moisture barrier itself is illustrated in fig. 5. The moisture barrier 50 is typically made from a (slightly) deformable foam material, having moisture retaining characteristics, such that moisture cannot seep from the ground and into the cabinet (10). A plurality of cut-outs or score lines 52 are provided in the moisture barrier 50, such that by removing the material apertures are provided in a predetermined pattern. The apertures may be sized such that it is possible to insert an optical fibre (including sheeting) through each aperture, but where the aperture is slightly smaller, thereby creating a substantially tight seal around the fibre/sheeting.

Turning back to fig. 4 the barrier 50 may be arranged in a bracket 54 arranged inside the cabinet 10. The bracket 54 also comprises holders/separators 56 for organizing the optical fibres as they enter and leave the cabinet 10. If the fibres do not occupy the entire cavity in the foundation structure intended for the fibres, a cover 58 may be provided.

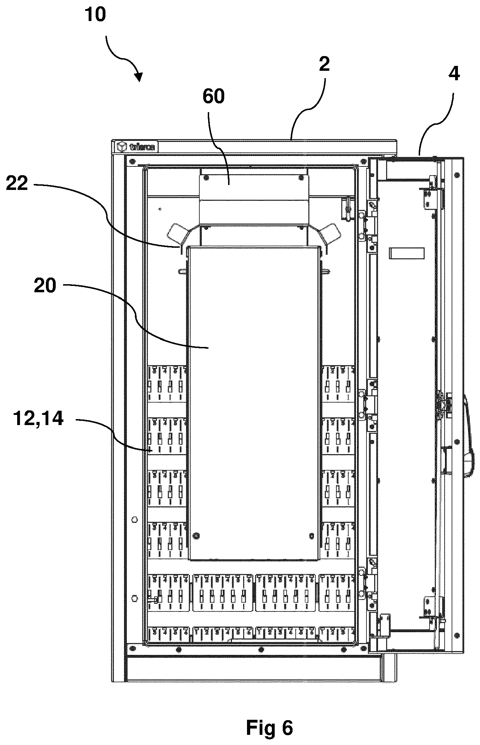

Fig. 6 illustrates one embodiment of the cabinet 10 comprising a housing 2 having side walls, a rear wall, and an openable door 4. In the illustrated embodiment comprises a plurality of separate holders 12 arranged in racks 14. Although not visible, more layers of racks may be provided, where each rack 14 comprises a plurality of holders 12, such that a large plurality of optical fibres may be organized in a single cabinet 10.

Inside the housing, a splice box 20 and a coil support 22 is arranged. Furthermore, a box holder 60 is illustrated. The box holder may be fixed to one of the side walls (e.g. the top side wall) or the rear wall. **In** the illustrated embodiment, the splice box is arranged in front of the holders 12.

The splice box is releasably arranged on the box holder.

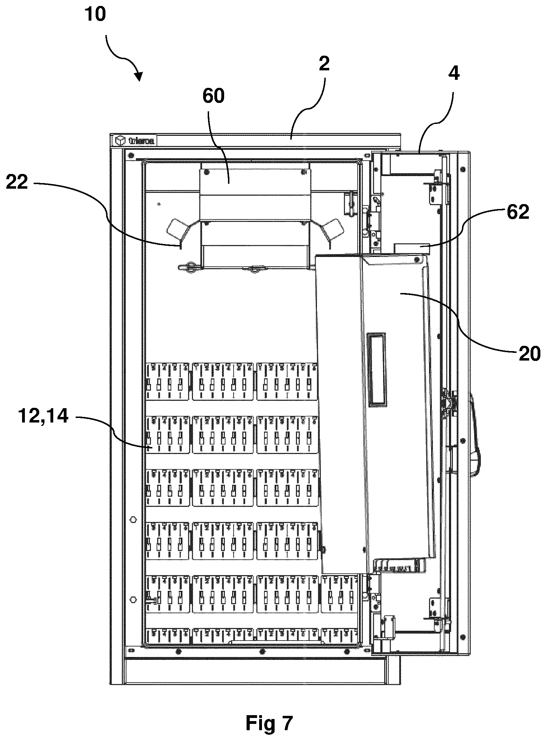

Fig. 7 illustrates the embodiment of figure 6 when the splice box is temporarily arranged in a temporary holder 62 arrange in the door 4. In the embodiment, the temporary holder is a opening in the door 4.

On the inside 16 of the door 4, a splice box 20 and a coil support 22 is arranged. Further a simple locking mechanism 24 is illustrated, such that when the door is closed and locked, the locking mechanism hinders unwarranted access.

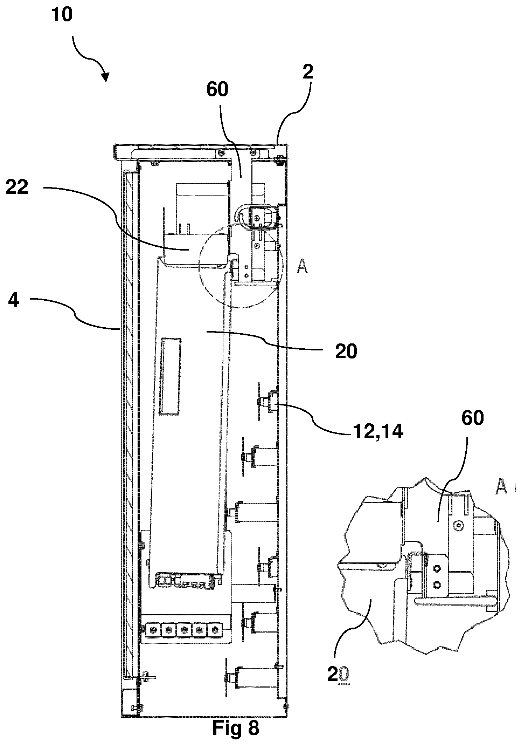

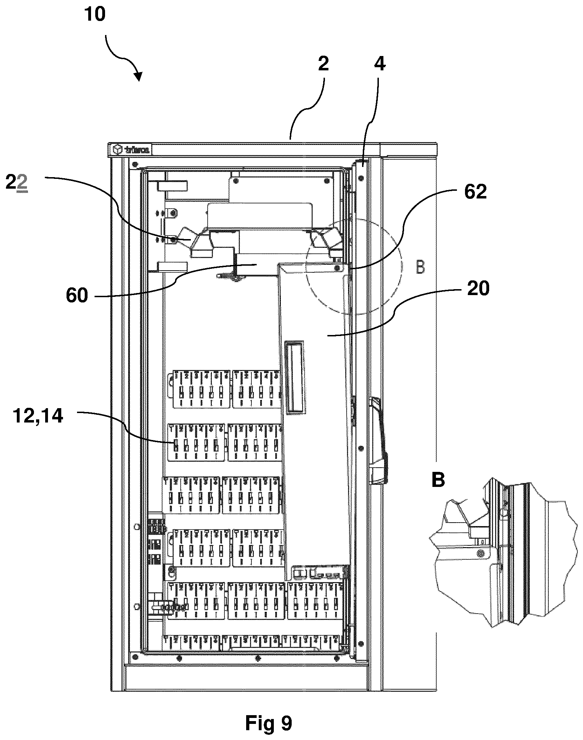

Figs. 8 and 9 illustrates comparable embodiments with close-ups of the splice box respectively arranged in box holder 60 and in the temporary holder 62. As is seen from figure 9, the box holder is fixed to the cabinet in a slightly different position compared to the embodiment in figs 6 and 7.

The illustrated splice box comprises hinges for interacting with the box holder and the temporary holder, respectively.

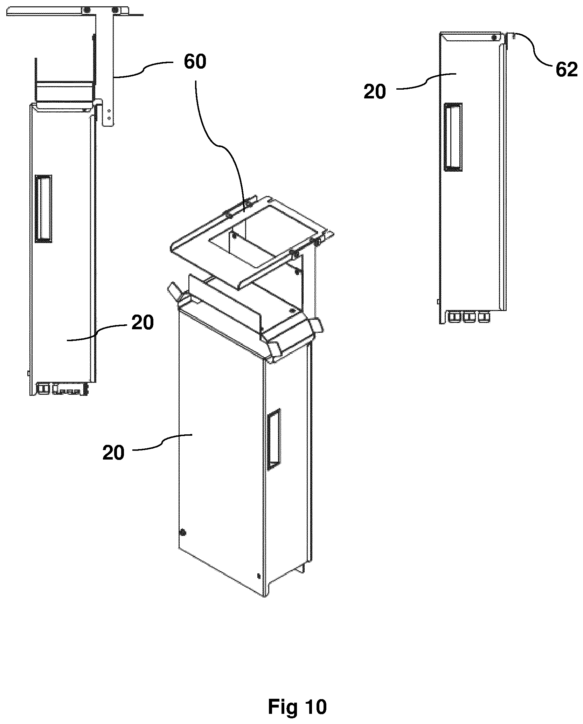

Fig. 10 illustrates embodiments of box holder and the splice box with hinges. The hinges may be considered a temporary holder 62 in itself, as these may accommodate for the splice box to be arranged with the hinges over the top of the door either on the inside or the outside of the door.

the top side wall) or the rear wall. In the illustrated embodiment, the splice box is arranged in front of the holders 12.

The splice box is releasably arranged on the box holder.

Fig. 7 illustrates the embodiment of figure 6 when the splice box is temporarily arranged in a temporary holder 62 arrange in the door 4. In the embodiment, the temporary holder is a opening in the door 4.

On the inside 16 of the door 4, a splice box 20 and a coil support 22 is arranged. Further a simple locking mechanism 24 is illustrated, such that when the door is closed and locked, the locking mechanism hinders unwarranted access.

Figs. 8 and 9 illustrates comparable embodiments with close-ups of the splice box respectively arranged in box holder 60 and in the temporary holder 62. As is seen from figure 9, the box holder is fixed to the cabinet in a slightly different position compared to the embodiment in figs 6 and 7.

The illustrated splice box comprises hinges for interacting with the box holder and the temporary holder, respectively.

Fig. 10 illustrates embodiments of box holder and the splice box with hinges. The hinges may be considered a temporary holder 62 in itself, as these may accommodate for the splice box to be arranged with the hinges over the top of the door either on the inside or the outside of the door.

## Claims

1. A termination cabinet (10) configured for organizing and protecting optical fibres, wherein a bundle comprising a plurality of optical fibres wherein each fibre is arranged in
a sheeting pipe is introduced into the termination cabinet through a first entrance opening, wherein
a second plurality of optical fibres leading to discrete users in the vicinity of the cabinet (10) is introduced into the cabinet through a second entrance opening, wherein each of said fibres from said first plurality of fibres is configured for being spliced to a dedicated fibre of the second plurality of fibres, wherein
a length of the spliced fibres is configured for being stored in a splice box (20) arranged inside the cabinet (10), and
wherein one or more holding racks (14) are provided inside said cabinet, wherein each holding rack has a plurality of holders (12), wherein each holder accommodates and is provided with a unique identifier for the particular single designated fibre **characterised in that** the termination cabinet is provided with a moisture barrier (50), wherein said moisture barrier has a pattern of pre-marked scored apertures intended for removal in order to allow passing through of incoming and outgoing sheeting pipes with optical fibres.

2. The termination cabinet (10) according to claim 1, wherein the splice box (20) is releasably arranged on a box holder (60) inside the cabinet.

3. The termination cabinet (10) according to claim 2, wherein the termination cabinet comprises a housing (2) and a door (4), where the box holder (60) is fixed to the housing (2) and where the termination cabinet (10) or the splice box comprises a temporary box holder (62) for temporarily arranging the slice box on the door.

4. The termination cabinet (10) according to any one or more of the preceding claims, comprising a coil support (22).

5. Termination cabinet according to any one or more of the preceding claims wherein a bracket (54) is provided where said bracket has a holder for retaining the moisture barrier in a fixed position and separate second holders (56) for organizing, guiding and holding bundles of optical fibres.

6. Termination cabinet according to any one or more of the preceding claims, wherein two or more brackets (54) are provided arranged in a tiered multilevel arrangement, where each bracket comprises a plurality of holders, each holder suitable to accommodate a single optical fiber, optionally protected by a sheeting.

7. Termination cabinet according to any one or more of the preceding claims, wherein a foundation structure (6) is provided, where said foundation structure has one or more passageways allowing the introduction of bundles of optical fibers into the cabinet and out of the cabinet, and where said foundation structure comprises means for fastening the cabinet to said foundation structure.

## Patentansprüche

1. Anschlussschrank (10), konfiguriert zum Organisieren und Schützen von Lichtleitfasern, wobei ein Bündel eine Vielzahl von Lichtleitfasern umfasst, wobei
jede Faser in
einem Folienrohr angeordnet ist, die durch eine erste Eintrittsöffnung in den Anschlussschrank eingeführt ist, wobei eine zweite Vielzahl von Lichtleitfasern, die zu diskreten Benutzern in der Nähe des Schranks (10) führen, durch eine zweite Eintrittsöffnung in den Schrank eingeführt ist, wobei
jede der erwähnten Fasern aus der erwähnten ersten Vielzahl von Fasern so konfiguriert ist, dass sie mit einer dedizierten Faser der zweiten Vielzahl von Fasern gespleißbar ist, wobei
eine Länge der gespleißten Fasern
so konfiguriert ist, dass sie in einer Spleißbox (20) gespeichert werden kann, die innerhalb des Schranks (10) angeordnet ist, und wobei ein oder mehrere Halterungsgestelle (14) innerhalb des erwähnten Schranks bereitgestellt sind, wobei jedes Halterungs-
gestell eine Vielzahl von Haltern (12) aufweist, wobei jeder Halter einen eindeutigen Identifikator
für die
bestimmte einzelne bezeichnete Faser aufnimmt und mit diesem bereitgestellt ist, **dadurch gekennzeichnet, dass** der Anschlussschrank mit einer Feuchtigkeitsbarriere (50) bereitgestellt ist, wobei
die erwähnte Feuchtigkeits-
barriere ein Muster aus vorgezeichneten, eingeritzten Durchbrüchen aufweist, die zum Entfernen vorgesehen sind, um das Durchführen von ein- und ausgehenden Folienrohren mit Lichtleitfasern zu erteilen.

2. Anschlussschrank (10) nach Anspruch 1, wobei der Spleißkasten (20) lösbar an einem Kastenhalter (60) innerhalb des Schranks angeordnet ist.

3. Anschlussschrank (10) nach Anspruch 2, wobei der Anschlussschrank ein Gehäuse (2) und eine Tür (4) umfasst, wobei der Kastenhalter (60) an dem Gehäuse (2) befestigt ist und wobei der Anschlussschrank (10) oder der Spleißkasten einen temporären Kastenhalter (62) zur temporären Anordnung des Spleißkastens an der Tür umfasst.

4. Anschlussschrank (10) gemäß einem oder mehreren der vorhergehenden Ansprüche, umfassend einen Spulenhalter (22).

5. Anschlussschrank gemäß einem oder mehreren der vorhergehenden Ansprüche, wobei eine Halterung (54) bereitgestellt ist, wobei die erwähnte Halterung einen Halter zum Befestigen der Feuchtigkeitsbarriere in einer festen Position und separate zweite Halter (56) zum Organisieren, Führung und Halt von Bündeln von Lichtleitfasern aufweist.

6. Anschlussschrank gemäß einem oder mehreren der vorhergehenden Ansprüche, wobei zwei oder mehr Halterungen (54) bereitgestellt und in einer gestuften mehrstufigen Anordnung angeordnet sind, wobei jede Halterung eine Vielzahl von Haltern umfasst, wobei jeder Halter dazu geeignet ist, eine einzelne optische Faser aufzunehmen, die optional durch eine Folie geschützt ist.

7. Anschlussschrank gemäß einem oder mehreren der vorhergehenden Ansprüche, wobei eine Fundamentstruktur (6) bereitgestellt ist, wobei die erwähnte Fundamentstruktur einen oder mehrere Durchgänge aufweist, die das Einführen von Bündeln von Lichtleitfasern in den Schrank und aus dem Schrank erteilen, und wobei die erwähnte Fundamentstruktur Mittel zum Befestigen des Schranks an der Fundamentstruktur umfasst.

## Revendications

1. Armoire de terminaison (10) configurée pour organiser et protéger les fibres optiques, dans laquelle
un faisceau comprenant une pluralité de fibres optiques dans laquelle
chaque fibre est agencée dans un tube en feuille et introduite dans l'armoire de terminaison par une première ouverture d'entrée, dans laquelle
une seconde pluralité de fibres optiques conduisant à des utilisateurs discrets à proximité de l'armoire (10) sont introduites dans l'armoire par une seconde ouverture d'entrée, dans laquelle chacune desdites fibres de ladite première pluralité de fibres est configurée pour être épissée à une fibre dédiée de la seconde pluralité de fibres, dans laquelle une longueur des fibres épissées est configurée pour être stockée dans une boîte d'épissure (20) agencée à l'intérieur de l'armoire (10), et dans laquelle un ou plusieurs supports de maintien (14) sont prévus à l'intérieur de ladite armoire, dans laquelle
chaque support de maintien comporte une pluralité de supports (12), dans laquelle chaque support accueille et est pourvu d'un identifiant unique pour la fibre désignée particulière , **caractérisé en ce que** l'armoire de terminaison est pourvue d'une barrière contre l'humidité (50), dans laquelle
ladite barrière contre l'humidité présente un motif d'ouvertures pré-marquées et rainurées destinées à être retirées afin de permettre le passage de tuyaux de revêtement entrants et sortants avec des fibres optiques.

2. Armoire de terminaison (10) selon la revendication 1, dans laquelle le boîtier d'épissure (20) est agencé de manière amovible sur un support de boîtier (60) à l'intérieur de l'armoire.

3. Armoire de terminaison (10) selon la revendication 2, dans laquelle l'armoire de terminaison comprend un boîtier (2) et une porte (4), où le support de boîte (60) est fixé au boîtier (2) et où l'armoire de terminaison (10) ou la boîte d'épissure comprend un support de boîte temporaire (62) pour agencer temporairement la boîte de tranches sur la porte.

4. Armoire de terminaison (10) selon l'une quelconque ou plusieurs des revendications précédentes, comprenant un support de bobine (22).

5. Armoire de terminaison selon l'une quelconque ou plusieurs des revendications précédentes, dans laquelle un support (54) est prévu où ledit support comporte un support pour maintenir la barrière contre l'humidité dans une position fixe et des seconds supports séparés (56) pour organiser, guider et maintenir des faisceaux de fibres optiques.

6. Armoire de terminaison selon l'une quelconque ou plusieurs des revendications précédentes, dans laquelle deux ou plusieurs supports (54) sont prévus, agencés selon un agencement à plusieurs niveaux où chaque support comprend une pluralité de supports, chaque support étant adapté pour accueillir une seule fibre optique, éventuellement protégée par une feuille.

7. Armoire de terminaison selon l'une quelconque ou plusieurs des revendications précédentes, dans laquelle une structure de fondation (6) est prévue où ladite structure de fondation comporte un ou plusieurs passages permettant l'introduction de faisceaux de fibres optiques dans l'armoire et hors de l'armoire, et où ladite structure de fondation comprend des moyens de fixation de l'armoire à ladite structure de fondation.
